# EUROPEAN PATENT APPLICATION

(11) **EP 4 319 023 A1**
(43) Date of publication of application: **07.02.2024**
(21) Application number: 22790987.6
(22) Date of filing: 18.04.2022
(51) Int. Cl.: H04L 5/00, H04L 1/18, H04W 4/06

(54) **PDSCH TRANSMITTING METHOD AND APPARATUS, PDSCH RECEIVING METHOD AND APPARATUS, AND COMMUNICATION DEVICE**

(30) Priority: 22.04.2021 CN 202110437444; 30.03.2022 CN 202210334304
(71) Applicant: Vivo Mobile Communication Co., Ltd., Dongguan, Guangdong 523863 (CN)
(72) Inventor: LI, Na, Dongguan, Guangdong 523863 (CN)
(74) Representative: Murgitroyd & Company
(86) International application number: PCT/CN2022/087336
(87) International publication number: WO 2022/222879

(57) **Abstract**

This application discloses a PDSCH transmission method and apparatus, a PDSCH reception method and apparatus, and a communication device, and pertains to the field of communications technologies. The PDSCH transmission method in embodiments of this application includes: determining, by a network-side device, a first time in a case that a second hybrid automatic repeat request HARQ process corresponding to a second physical downlink shared channel PDSCH scheduled by the network-side device is the same as a first HARQ process corresponding to a first PDSCH, where the first PDSCH is a PDSCH scheduled by the network-side device before scheduling of the second PDSCH, the first time is related to first information, and the first information indicates whether a terminal feeds back a hybrid automatic repeat request acknowledgement HARQ-ACK for the first PDSCH; and transmitting, by the network-side device, the second PDSCH at a time point not earlier than the first time.

## Description

### CROSS-REFERENCE TO RELATED APPLICATIONS

This application claims priority to Chinese Patent Application No. 202110437444.1, filed in China on April 22, 2021, which is incorporated herein by reference in its entirety; and this application also claims priority to Chinese Patent Application No. 202210334304.6, filed in China on March 30, 2022, which is incorporated herein by reference in its entirety.

### TECHNICAL FIELD

This application relates to the field of communications technologies, and in particular, to a PDSCH transmission method and apparatus, a PDSCH reception method and apparatus, and a communication device.

### BACKGROUND

In the related art, because processing a physical downlink shared channel (Physical Downlink Shared Channel, PDSCH) by user equipment (User Equipment, UE) requires some time, a base station needs to satisfy a specific condition during scheduling of the PDSCH. When the UE feeds back a hybrid automatic repeat request acknowledgement (Hybrid automatic repeat request acknowledgement, HARQ-ACK) for PDSCH, the base station cannot schedule PDSCH with a same process until an expected HARQ-ACK transmission is completed. However, for a group common PDSCH that transmits a broadcast/multicast (broadcast/multicast) service, no HARQ-ACK may be fed back. If an existing scheme is used, the base station cannot determine a scheduling time for a PDSCH with a same HARQ process as the group common PDSCH during scheduling.

### SUMMARY

Embodiments of this application provide a PDSCH transmission method and apparatus, a PDSCH reception method and apparatus, and a communication device, which can resolve the problem that an existing PDSCH scheduling manner is not applicable to group common PDSCHs for transmitting multicast/broadcast services.

According to a first aspect, a PDSCH transmission method is provided, including:
determining, by a network-side device, a first time in a case that a second hybrid automatic repeat request HARQ process corresponding to a second physical downlink shared channel PDSCH scheduled by the network-side device is the same as a first HARQ process corresponding to a first PDSCH, where the first PDSCH is a PDSCH scheduled by the network-side device before scheduling of the second PDSCH, the first time is related to first information, and the first information indicates whether a terminal feeds back a hybrid automatic repeat request acknowledgement HARQ-ACK for the first PDSCH; and
transmitting, by the network-side device, the second PDSCH at a time point not earlier than the first time.

According to a second aspect, a PDSCH reception method is provided, including:
receiving, by a terminal, a second PDSCH in a case that a second hybrid automatic repeat request HARQ process corresponding to the second physical downlink shared channel PDSCH is the same as a first HARQ process corresponding to a first PDSCH and a transmit time of the second PDSCH is not earlier than a first time; where
the first PDSCH is a PDSCH scheduled by a network-side device before scheduling of the second PDSCH; and
the first time is related to first information, and the first information indicates whether the terminal feeds back a hybrid automatic repeat request acknowledgement HARQ-ACK for the first PDSCH.

According to a third aspect, a PDSCH transmission apparatus is provided, including:
a first determining module, configured to determine a first time in a case that a second hybrid automatic repeat request HARQ process corresponding to a second physical downlink shared channel PDSCH scheduled by the network-side device is the same as a first HARQ process corresponding to a first PDSCH, where the first PDSCH is a PDSCH scheduled by the network-side device before scheduling of the second PDSCH, the first time is related to first information, and the first information indicates whether a terminal feeds back a hybrid automatic repeat request acknowledgement HARQ-ACK for the first PDSCH; and
a first transmission module, configured to transmit the second PDSCH at a time point not earlier than the first time.

According to a fourth aspect, a PDSCH reception apparatus is provided, including:
a first receiving module, configured to receive, for a terminal, a second PDSCH in a case that a second hybrid automatic repeat request HARQ process corresponding to the second physical downlink shared channel PDSCH is the same as a first HARQ process corresponding to a first PDSCH and a transmit time of the second PDSCH is not earlier than a first time; where
the first PDSCH is a PDSCH scheduled by a network-side device before scheduling of the second PDSCH; and
the first time is related to first information, and the first information indicates whether the terminal feeds back a hybrid automatic repeat request acknowledgement HARQ-ACK for the first PDSCH.

According to a fifth aspect, a network-side device is provided, where the network-side device includes a processor, a memory, and a program or instructions stored in the memory and executable on the processor, and when the program or the instructions are executed by the processor, the steps of the method according to the first aspect are implemented.

According to a sixth aspect, a network-side device is provided, including a processor and a communication interface, where the processor is configured to determine a first time in a case that a second hybrid automatic repeat request HARQ process corresponding to a second physical downlink shared channel PDSCH scheduled by the network-side device is the same as a first HARQ process corresponding to a first PDSCH, where the first PDSCH is a PDSCH scheduled by the network-side device before scheduling of the second PDSCH, the first time is related to first information, and the first information indicates whether a terminal feeds back a hybrid automatic repeat request acknowledgement HARQ-ACK for the first PDSCH; and
the communication interface is configured to transmit the second PDSCH at a time point not earlier than the first time.

According to a seventh aspect, a terminal is provided, where the terminal includes a processor, a memory, and a program or instructions stored in the memory and executable on the processor, and when the program or the instructions are executed by the processor, the steps of the method according to the second aspect are implemented.

According to an eighth aspect, a terminal is provided, including a processor and a communication interface, where the communication interface is configured to: receive, for the terminal, a second PDSCH in a case that a second hybrid automatic repeat request HARQ process corresponding to the second physical downlink shared channel PDSCH is the same as a first HARQ process corresponding to a first PDSCH and a transmit time of the second PDSCH is not earlier than a first time; where
the first PDSCH is a PDSCH scheduled by a network-side device before scheduling of the second PDSCH; and
the first time is related to first information, and the first information indicates whether the terminal feeds back a hybrid automatic repeat request acknowledgement HARQ-ACK for the first PDSCH.

According to a ninth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to a tenth aspect, a chip is provided, where the chip includes a processor and a communication interface, the communication interface is coupled to the processor, and the processor is configured to execute a program or instructions to implement the method according to the first aspect or implement the method according to the second aspect.

According to an eleventh aspect, a computer program product is provided, where the computer program product is stored in a non-transitory storage medium, and the computer program product is executed by at least one processor to implement the steps of the method according to the first aspect or the second aspect.

According to a twelfth aspect, a communication device is provided and configured to perform the steps of the method described in the first aspect or the second aspect.

In the embodiments of this application, in a case that the HARQ process corresponding to the second PDSCH scheduled by the network-side device is the same as the first HARQ process corresponding to the first PDSCH, the first time is determined; and the second PDSCH is transmitted at a time point not earlier than the first time. In this way, in a case that no HARQ-ACK is fed back for the first PDSCH, the transmit time of the second PDSCH can be also determined. That is, the embodiments of this application can be applied to group common PDSCHs for transmitting multicast/broadcast services or PDSCHs for which no HARQ-ACK information is fed back, and this can ensure that the terminal has sufficient time to process a received PDSCH, thereby improving effectiveness of system communication.

### BRIEF DESCRIPTION OF DRAWINGS

FIG. 1 is a structural diagram of a communication system to which the embodiments of this application are applicable;
FIG. 2 is a schematic flowchart of a PDSCH transmission method according to an embodiment of this application;
FIG. 3 is a schematic diagram of a position between PDSCH1 and PDSCH2 according to an embodiment of this application;
FIG. 4 is a schematic flowchart of a PDSCH reception method according to an embodiment of this application;
FIG. 5 is a schematic diagram of a PDSCH transmission module according to an embodiment of this application;
FIG. 6 is a structural block diagram of a network-side device according to an embodiment of this application;
FIG. 7 is a schematic diagram of a PDSCH reception module according to an embodiment of this application;
FIG. 8 is a structural block diagram of a communication device according to an embodiment of this application; and
FIG. 9 is a structural block diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

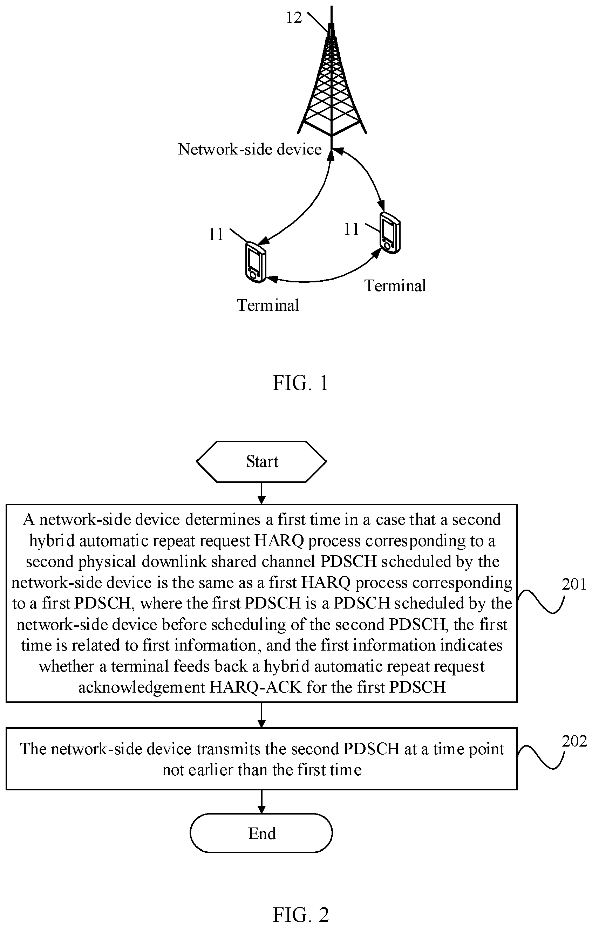

FIG. 1 is a structural diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a smart watch, a wrist band, earphones, glasses, or the like. It should be noted that a specific type of the terminal 11 is not limited in the embodiments of this application. The network-side device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Networks, WLAN) access point, a wireless fidelity (Wireless Fidelity, WiFi) node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail a PDSCH transmission method provided in the embodiments of this application by using some embodiments and application scenarios thereof with reference to the accompanying drawings.

As shown in FIG. 2, an embodiment of this application provides a PDSCH transmission method including the following steps.

Step 201: A network-side device determines a first time in a case that a second hybrid automatic repeat request HARQ process corresponding to a second physical downlink shared channel PDSCH scheduled by the network-side device is the same as a first HARQ process corresponding to a first PDSCH, where the first PDSCH is a PDSCH scheduled by the network-side device before scheduling of the second PDSCH, the first time is related to first information, and the first information indicates whether a terminal feeds back a hybrid automatic repeat request acknowledgement HARQ-ACK for the first PDSCH.

In this step, in a given scheduled cell, the network-side device determines the first time in the case that the second HARQ process corresponding to the second PDSCH scheduled by the network-side device is the same as the first HARQ process corresponding to the first PDSCH (or HARQ process IDs are the same).

Optionally, the first PDSCH is a group common PDSCH.

Step 202: The network-side device transmits the second PDSCH at a time point not earlier than the first time.

Herein, the second PDSCH is transmitted at a time point not earlier than the first time (that is, a start position of the second PDSCH is not earlier than the first time) to ensure that the terminal has sufficient time to process the received first PDSCH.

In this embodiment of this application, in the absence of special transmission requirements, the network-side device may transmit the second PDSCH at any time point not earlier than the first time.

According to the PDSCH transmission method in this embodiment of this application, the first time is determined in a case that the HARQ process corresponding to the second PDSCH scheduled by the network-side device is the same as the first HARQ process corresponding to the first PDSCH, and the second PDSCH is transmitted at a time point not earlier than the first time. In this way, in a case that no HARQ-ACK is fed back for the first PDSCH, the transmit time of the second PDSCH can be also determined. That is, the embodiments of this application can be applied to group common PDSCHs for transmitting multicast/broadcast services or PDSCHs for which no HARQ-ACK information is fed back, and this can ensure that the terminal has sufficient time to process a received PDSCH, thereby improving effectiveness of system communication.

Optionally, that the network-side device determines the first time includes:
determining, by the network-side device, the first time based on at least one of an indicating manner for the first information and content of the first information; where
the indicating manner includes at least one of the following:
   being indicated by higher-layer signaling, for example, being indicated by using at least one of radio resource control (Radio Resource Control, RRC) and media access control control element (Medium Access Control Control Element, MAC CE), where the being indicated by using at least one of RRC and MAC CE may also be described as being configured by using at least one of RRC and MAC CE; and
   being indicated by downlink control information (Downlink Control Information, DCI).

The mechanism for determining the first time includes:
determining the first time according to a feedback timing indication in first downlink control information DCI or a predefined rule.

Herein, based on different indicating manners or different content of the first information, different mechanisms are used for determining the first time to ensure that the terminal has sufficient time to process the received first PDSCH before receiving the second PDSCH.

In a first optional implementation, the determining, by the network-side device, the first time based on at least one of an indicating manner for the first information and content of the first information includes:
in a case that the first information is indicated by the higher-layer signaling, for example, being indicated by RRC, and that the first information indicates that the terminal does not feed back a HARQ-ACK for the first PDSCH, determining, by the network-side device, the first time according to a feedback timing indication in first downlink control information DCI or a predefined rule; where
the first DCI is DCI for scheduling the first PDSCH.

In a second optional implementation, the determining, by the network-side device, the first time based on at least one of an indicating manner for the first information and content of the first information includes:
in a case that the first information is indicated by the DCI, determining, by the network-side device, the first time according to a predefined rule or determining the first time based on the content of the first information.

Specifically, in the first optional implementation or in the second optional implementation, the determining the first time based on the content of the first information includes:
in a case that the first information indicates that the terminal feeds back a HARQ-ACK for the first PDSCH, determining the first time based on an end position of a HARQ-ACK for the first PDSCH (the end of the transmission of HARQ-ACK for the first PDSCH, or the end of the transmission of HARQ-ACK for that HARQ process), that is, using the end position of the HARQ-ACK for the first PDSCH as the first time; or
in a case that the first information indicates that the terminal does not feed back a HARQ-ACK for the first PDSCH, determining the first time according to a feedback timing indication in first downlink control information DCI or the predefined rule; where
the first DCI is DCI for scheduling the first PDSCH. In addition, one PDSCH in this embodiment of this application corresponds to one HARQ process.

In the first optional implementation or in the second optional implementation, the determining the first time according to a feedback timing indication in first downlink control information DCI includes:
determining, according to the feedback timing indication in the first DCI, a time unit for feeding back the HARQ-ACK; and
determining a target position of the time unit for feeding back the HARQ-ACK as the first time.

The time unit may be slot, sub-slot, or symbol.

Further, the target position includes one of the following:
an end position;
a start position;
a start/end position of a predefined symbol; and
an end position of a physical uplink control channel PUCCH or physical uplink share channel PUSCH for transmitting the HARQ-ACK.

Herein, the PUCCH or PUSCH for transmitting the HARQ-ACK may be a PUCCH or PUSCH resource that is determined for an assumption that a HARQ-ACK needs to be fed back for the first PDSCH. Actually, no HARQ-ACK may be transmitted for the first PDSCH (for example, no HARQ-ACK PUCCH needs to be transmitted because HARQ-ACK feedback is not required for the first PDSCH, or a PUCCH or PUSCH channel cannot be transmitted due to other reasons), or the PUCCH or PUSCH for transmitting the HARQ-ACK may be a PUCCH or PUSCH resource that is determined based on HARQ-ACK feedbacks for other PDSCHs requiring HARQ-ACK feedback in the time unit and/or based on other types of uplink control information (Uplink Control Information, UCI), where the other types of UCI may be channel state information (Channel State Information, CSI) or scheduling request (Scheduling Request, SR).

In the first optional implementation or in the second optional implementation, the predefined rule includes:
the first time being determined based on a position of T1 time after an end position of the first PDSCH.

Further, the T1 time is predefined, or the T1 time is determined based on a PDSCH processing time, or the T1 time is determined based on a subcarrier spacing of PDSCH, or the T1 time is related to a terminal capability, or the T1 time is reported by the terminal to the network-side device, or the T1 time is an end time corresponding to a maximum number of retransmissions.

Herein, the unit of the T1 time may be symbol, time unit, or absolute time length.

For example, a time length of the T1 time corresponds to α times the PDSCH processing time, where 0 < α ≤ 1.

For another example, T1=N1, and N1 is related to a subcarrier spacing of the PDSCH and/or a PDCCH scheduling the PDSCH; specifically, N1=13 for µ=0, N1=13 for µ=1, N1=20 for µ=2, and N1=24 for µ=0. µ is used to indicate the subcarrier spacing of the PDSCH and/or the PDCCH scheduling the PDSCH or indicate a smallest subcarrier spacing in the subcarrier spacing of the PDSCH and the subcarrier spacing of the PDCCH scheduling the PDSCH, where the subcarrier spacing is denoted by 15*2^{µ}kHz.

The following describes the PDSCH transmission method of this application in detail with reference to specific embodiments.

### Embodiment 1:

The network-side device configures, through higher layer, whether a HARQ-ACK is fed back for a group common PDSCH (optionally, the group common PDSCH herein is not a PDSCH scrambled by system information RNTI (System Information RNTI, SI-RNTI), and is mainly a PDSCH for transmitting a multicast/broadcast service, for example, a PDSCH scrambled by group RNTI (Group RNTI, G-RNTI) or a PDSCH scrambled by group configured scheduling RNTI (Group Configured Scheduling RNTI, G-CS-RNTI)). For example, for UE1, the network-side device configures the UE1 not to feed back a HARQ-ACK of the group common PDSCH.

In a specific scheduled cell, the network-side device schedules PDSCH1 with an end position being symbol i, where a HARQ process ID (HARQ process ID) of PDSCH1 is x. After the PDSCH1, the base station schedules PDSCH2, and a HARQ process ID of PDSCH2 is also x, where x is a non-integer number, a value of x ranges from 0 to Y, and Y is a maximum number of HARQ processes supported by the PDSCH in the scheduled cell, for example, x is 0, 1, 2, ..., and 15. In this case, the PDSCH2 needs to satisfy at least one of the following conditions:
Condition 1: Assuming that DCI for scheduling PDSCH1 is DCI 1, DCI 1 contains a PDSCH to HARQ-ACK feedback timing indication (for example, an indication field PDSCH-to-HARQ_feedback timing indicator), and the timing indication in DCI 1 is k1, the UE determines, based on k1, a time unit corresponding to HARQ-ACK feedback for the PDSCH1, and ensures that the PDSCH2 and the determined time unit satisfy one of the following:
(a) a start position of the PDSCH2 is not earlier than a start position, an end position, or a predefined position (for example, a middle position of the time unit) of the determined time unit;
(b) the UE determines, according to the HARQ-ACK fed back for the PDSCH1, a transmission resource corresponding to the HARQ-ACK feedback, and the start position of the PDSCH2 is not earlier than the end position of the HARQ-ACK transmission resource corresponding to the PDSCH1; and
(c) if the UE needs to feed back HARQ-ACKs of other PDSCHs within the determined time unit, the start position of the PDSCH2 is not earlier than an end position of HARQ-ACK transmission resources corresponding to the other PDSCHs.

In addition, when the PDSCH to HARQ-ACK feedback timing indication is not included in the DCI 1, the time unit corresponding to the HARQ-ACK feedback from the PDSCH1 may alternatively be determined based on the RRC-configured feedback timing indication, for example, the feedback timing indication is determined based on a value configured for at least one parameter of dl-DataToUL-ACK, dl-DataToUL-ACK-r16, and dl-DataToUL-ACKF orDCIF ormat 1 2.

Condition 2: The start position of the PDSCH2 cannot be earlier than the first time determined according to the predefined rule.

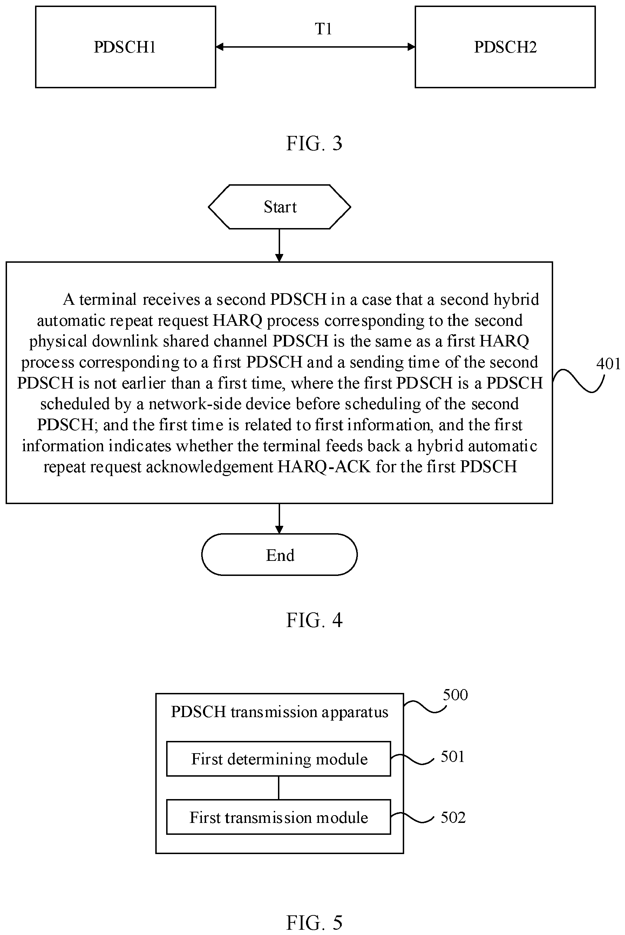

As shown in FIG. 3, the predefined rule is the first time being determined based on a position of T1 time after an end position of the first PDSCH, that is, an end position of T1 is the first time.

Specifically, T1 contains a predefined number of symbols, the number of symbols contained in T1 varies for different subcarrier spacings and/or different PDSCH processing capabilities; or T1 is a predefined time, for example, being a PDSCH processing time.

### Embodiment 2

The network-side device indicates, by using DCI, whether a HARQ-ACK is fed back for a group common PDSCH (optionally, the group common PDSCH herein is not a PDSCH scrambled by SI-RNTI, and is mainly a PDSCH for transmitting a multicast/broadcast service). For example, the network-side device indicates, by using DCI for scheduling the group common PDSCH, whether the UE feeds back the HARQ-ACK for the group common PDSCH, which is, for example, directly indicated by using a specific field in the DCI for scheduling the group common PDSCH or implicitly indicated in other manners, which is not limited herein.

In a specific scheduled cell, the network-side device schedules the PDSCH1 with an end position being symbol i, where the HARQ process ID of the PDSCH1 is 0. After the PDSCH1, the network-side device schedules the PDSCH2, where the HARQ process ID of the PDSCH2 is also 0. In this case, the PDSCH2 needs to satisfy at least one of the following conditions:

Condition 1: The first time is determined based on whether the DCI indicates the UE to feed back the HARQ-ACK information for the first PDSCH, and the start position of the PDSCH2 is not earlier than the first time.

If the DCI indicates the UE to feed back the HARQ-ACK information for the first PDSCH, the first time is an end position of HARQ-ACK transmission for the first PDSCH, that is, the start position of the PDSCH2 is not earlier than the end position of HARQ-ACK transmission for the PDSCH1 (the end of the transmission of HARQ-ACK for PDSCH1, or the end of the transmission of HARQ-ACK for that HARQ process).

If the DCI indicates the UE not to feed back the HARQ-ACK information for the first PDSCH, the first time is determined according to the feedback timing indication of the DCI for the terminal or the predefined rule.

Condition 2: The start position of the PDSCH2 is not earlier than the first time determined according to the predefined rule.

Herein, regardless of whether the DCI indicates the UE to feed back the HARQ-ACK for the first PDSCH, as long as it is a group common PDSCH, or regardless of whether the DCI indicates the UE to feed back the HARQ-ACK for the first PDSCH or whether higher-layer signaling indicates the UE to feed back the HARQ-ACK for the first PDSCH, as long as it is a first PDSCH for which no HARQ-ACK is to be fed back, the UE determines the first time according to the predefined rule.

It should be noted that the HARQ-ACK for the first PDSCH includes at least one of acknowledgement (Acknowledgement, ACK) and negative acknowledgement (Non Acknowledgement, NACK). This embodiment of this application is also applicable to a PDSCH configured with a feedback mode of NACK only. For the PDSCH configured with the feedback mode of NACK only, the UE merely feedbacks a NACK when the UE cannot successfully decode the PDSCH; otherwise, the UE does not need to feed back the HARQ information. The definition of the first time in this embodiment of this application is also applicable to the PDSCH in this mode. That is, the base station transmits the first PDSCH, and if receiving a NACK, determines the first time based on the end position of the NACK transmission, or if receiving no NACK, determines the first time in the foregoing predefined manner or according to a timing indication in the DCI.

In addition, this embodiment of this application is also applicable to a PDSCH configured with a feedback mode of NACK skipping or ACK skipping. For the PDSCH configured with the feedback mode of NACK skipping, the UE does not need to feedback a NACK when failing to successfully decode the PDSCH, or for the PDSCH configured with the feedback mode of ACK skipping, the UE does not need to feedback an ACK when successfully decoding the PDSCH. The definition of the first time in this embodiment of this application is also applicable to the PDSCH in this mode. That is, the base station transmits the first PDSCH, and if receiving an ACK (for NACK skipping mode)/NACK (for ACK skipping mode), determines the first time based on the end position of ACK/NACK transmission, or if receiving no ACK/NACK, determines the first time in the foregoing predefined manner or according to the timing indication in the DCI.

According to the PDSCH transmission method in this embodiment of this application, the first time is determined in a case that the HARQ process corresponding to the second PDSCH scheduled by the network-side device is the same as the first HARQ process corresponding to the first PDSCH, and the second PDSCH is transmitted at a time point not earlier than the first time. In this way, in a case that no HARQ-ACK is fed back for the first PDSCH, the transmit time of the second PDSCH can be also determined. That is, the embodiments of this application can be applied to group common PDSCHs for transmitting multicast/broadcast services or PDSCHs for which no HARQ-ACK information is fed back, and this can ensure that the terminal has sufficient time to process a received PDSCH, thereby improving effectiveness of system communication.

As shown in FIG. 4, an embodiment of this application further provides a PDSCH reception method including the following step.

Step 401: A terminal receives a second PDSCH in a case that a second hybrid automatic repeat request HARQ process corresponding to the second physical downlink shared channel PDSCH is the same as a first HARQ process corresponding to a first PDSCH and a sending time of the second PDSCH is not earlier than a first time.

The first PDSCH is a PDSCH scheduled by a network-side device before scheduling of the second PDSCH; and
the first time is related to first information, and the first information indicates whether the terminal feeds back a hybrid automatic repeat request acknowledgement HARQ-ACK for the first PDSCH.

Optionally, the first PDSCH is a group common PDSCH.

In this embodiment of this application, the network-side device determines the first time in a case that the HARQ process corresponding to the second PDSCH scheduled by the network-side device is the same as the first HARQ process corresponding to the first PDSCH, and transmits the second PDSCH at a time point not earlier than the first time; then, the terminal receives the second PDSCH at a time point not earlier than the first time. In this way, in a case that no HARQ-ACK is fed back for the first PDSCH, the transmit time of the second PDSCH can be also determined. That is, the embodiments of this application can be applied to group common PDSCHs for transmitting multicast/broadcast services or PDSCHs for which no HARQ-ACK information is fed back, and this can ensure that the terminal has sufficient time to process a received PDSCH, thereby improving effectiveness of system communication.

Optionally, the method in this embodiment of this application further includes:
not expecting, by the terminal, to receive the PDSCH prior to the first time in a case that the second hybrid automatic repeat request HARQ process corresponding to the second physical downlink shared channel PDSCH scheduled by the network-side device is the same as the first HARQ process corresponding to the first PDSCH (the UE is not expected to receive another PDSCH for a given HARQ process starting earlier than T1).

That is, if the second hybrid automatic repeat request HARQ process corresponding to the second physical downlink shared channel PDSCH scheduled by the network-side device is the same as the first HARQ process corresponding to the first PDSCH, the terminal determines a scheduling error.

Optionally, before the receiving the second PDSCH, the following is further included:
receiving the first PDSCH.

Herein, after the first PDSCH is received, the second PDSCH is received in a case that a transmit time of the second PDSCH is not earlier than the first time to ensure that the terminal has sufficient time to process the received first PDSCH.

In this embodiment of this application, the network-side device determines the first time in a case that the HARQ process corresponding to the second PDSCH scheduled by the network-side device is the same as the first HARQ process corresponding to the first PDSCH, and transmits the second PDSCH at a time point not earlier than the first time; then, the terminal receives the second PDSCH at a time point not earlier than the first time. In this way, in a case that no HARQ-ACK is fed back for the first PDSCH, the transmit time of the second PDSCH can be also determined. That is, the embodiments of this application can be applied to group common PDSCHs for transmitting multicast/broadcast services or PDSCHs for which no HARQ-ACK information is fed back, and this can ensure that the terminal has sufficient time to process a received PDSCH, thereby improving effectiveness of system communication.

It should be noted that, for the PDSCH transmission method provided by the embodiments of this application, the execution body may be a PDSCH transmission apparatus, or a control module for executing the PDSCH transmission method in the PDSCH transmission apparatus. In the embodiments of this application, the PDSCH transmission method being performed by the PDSCH transmission apparatus is used as an example to describe the PDSCH transmission apparatus provided in the embodiments of this application.

As shown in FIG. 5, an embodiment of this application further provides a PDSCH transmission apparatus 500 including:
a first determining module 501, configured to determine a first time in a case that a second hybrid automatic repeat request HARQ process corresponding to a second physical downlink shared channel PDSCH scheduled by the network-side device is the same as a first HARQ process corresponding to a first PDSCH, where the first PDSCH is a PDSCH scheduled by the network-side device before scheduling of the second PDSCH, the first time is related to first information, and the first information indicates whether a terminal feeds back a hybrid automatic repeat request acknowledgement HARQ-ACK for the first PDSCH; and
a first transmission module 502, configured to transmit the second PDSCH at a time point not earlier than the first time.

Optionally, the first determining module is configured to determine the first time based on at least one of an indicating manner for the first information and content of the first information; where
the indicating manner includes at least one of the following:
being indicated by higher-layer signaling; and
being indicated by downlink control information DCI.

Optionally, the first determining module is configured to: in a case that the first information is indicated by the higher-layer signaling and the first information indicates that the terminal does not feed back a HARQ-ACK for the first PDSCH, determine, for the network-side device, the first time according to a feedback timing indication in first downlink control information DCI or a predefined rule; where
the first DCI is DCI for scheduling the first PDSCH.

Optionally, the first determining module is configured to: in a case that the first information is indicated by the DCI, determine, for the network-side device, the first time according to a predefined rule or determine the first time based on the content of the first information.

Optionally, the first determining module is configured to: in a case that the first information indicates that the terminal feeds back a HARQ-ACK for the first PDSCH, determine the first time based on an end position of a HARQ-ACK for the first PDSCH; or
in a case that the first information indicates that the terminal does not feed back a HARQ-ACK for the first PDSCH, determine the first time according to a feedback timing indication in first downlink control information DCI or the predefined rule; where
the first DCI is DCI for scheduling the first PDSCH.

Optionally, the first determining module includes:
a first determining submodule, configured to determine, according to the feedback timing indication in the first DCI, a time unit for feeding back the HARQ-ACK; and
a second determining submodule, configured to determine a target position of the time unit for feeding back the HARQ-ACK as the first time.

Optionally, the target position includes one of the following:
an end position;
a start position;
a start/end position of a predefined symbol; and
an end position of a PUCCH or PUSCH for transmitting the HARQ-ACK.

Optionally, the predefined rule includes:
the first time being determined based on a position of T1 time after an end position of the first PDSCH.

Optionally, the T1 time is predefined, or the T1 time is determined based on a PDSCH processing time, or the T1 time is determined based on a subcarrier spacing of PDSCH, or the T1 time is related to a terminal capability, or the T1 time is reported by the terminal to the network-side device, or the T1 time is an end time corresponding to a maximum number of retransmissions.

The PDSCH transmission apparatus in this embodiment of this application determines the first time in a case that the HARQ process corresponding to the second PDSCH scheduled by the network-side device is the same as the first HARQ process corresponding to the first PDSCH, and transmits the second PDSCH at a time point not earlier than the first time. In this way, in a case that no HARQ-ACK is fed back for the first PDSCH, the transmit time of the second PDSCH can be also determined. That is, the embodiments of this application can be applied to group common PDSCHs for transmitting multicast/broadcast services or PDSCHs for which no HARQ-ACK information is fed back, and this can ensure that the terminal has sufficient time to process a received PDSCH, thereby improving effectiveness of system communication.

The apparatus provided in this embodiment of this application is capable of implementing the processes implemented in the method embodiment in FIG. 2, with the same technical effects achieved. To avoid repetition, details are not described herein again.

An embodiment of this application further provides a network-side device, including a processor and a communication interface, where the processor is configured to determine a first time in a case that a second hybrid automatic repeat request HARQ process corresponding to a second physical downlink shared channel PDSCH scheduled by the network-side device is the same as a first HARQ process corresponding to a first PDSCH, where the first PDSCH is a PDSCH scheduled by the network-side device before scheduling of the second PDSCH, the first time is related to first information, and the first information indicates whether a terminal feeds back a hybrid automatic repeat request acknowledgement HARQ-ACK for the first PDSCH; and the communication interface is configured to transmit the second PDSCH at a time point not earlier than the first time. The network-side device embodiments correspond to the foregoing network-side device method embodiments, and the implementation processes and implementations of the foregoing method embodiments can be applied to the network-side device embodiments, with the same technical effects achieved.

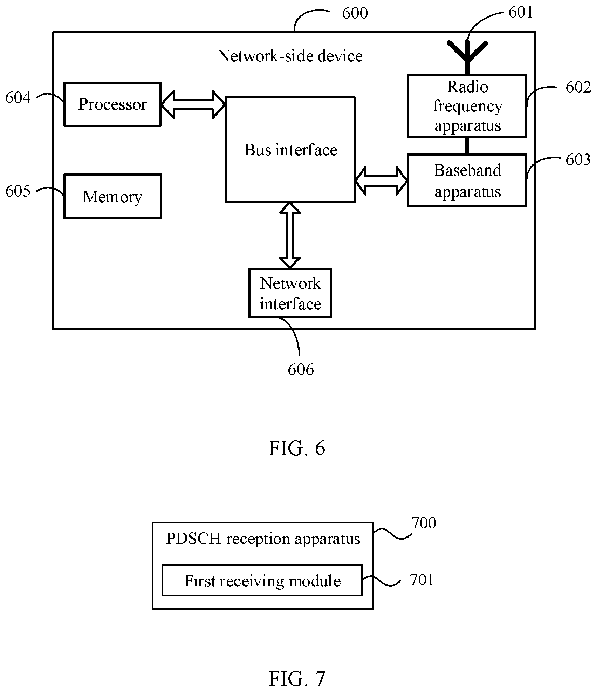

Specifically, an embodiment of this application further provides a network-side device. As shown in FIG. 6, the network device 600 includes an antenna 601, a radio frequency apparatus 602, and a baseband apparatus 603. The antenna 601 is connected to the radio frequency apparatus 602. In an uplink direction, the radio frequency apparatus 602 receives information by using the antenna 601, and sends the received information to the baseband apparatus 603 for processing. In a downlink direction, the baseband apparatus 603 processes to-be-sent information, and sends the information to the radio frequency apparatus 602; and the radio frequency apparatus 602 processes the received information and then sends the information out by using the antenna 601.

The frequency band processing apparatus may be located in the baseband apparatus 603. The method performed by the network-side device in the foregoing embodiments may be implemented in the baseband apparatus 603, and the baseband apparatus 603 includes a processor 604 and a memory 605.

The baseband apparatus 603 may include, for example, at least one baseband board, where a plurality of chips are disposed on the baseband board. As shown in FIG. 6, one of the chips is, for example, the processor 604, connected to the memory 605, to invoke a program in the memory 605 to perform the operation of the network-side device shown in the foregoing method embodiment.

The baseband apparatus 603 may further include a network interface 606, configured to exchange information with the radio frequency apparatus 602, where the interface is, for example, a common public radio interface (Common Public Radio Interface, CPRI).

Specifically, the network-side device in this embodiment of this application further includes: instructions or a program stored in the memory 605 and executable on the processor 604. The processor 604 invokes the instructions or program in the memory 605 to execute the method executed by the modules shown in FIG. 5, with the same technical effects achieved. To avoid repetition, details are not repeated herein.

As shown in FIG. 7, an embodiment of this application further provides a PDSCH reception apparatus 700 including:
a first receiving module 701, configured to receive, for a terminal, a second PDSCH in a case that a second hybrid automatic repeat request HARQ process corresponding to the second physical downlink shared channel PDSCH is the same as a first HARQ process corresponding to a first PDSCH and a sending time of the second PDSCH is not earlier than a first time; where
the first PDSCH is a PDSCH scheduled by a network-side device before scheduling of the second PDSCH; and
the first time is related to first information, and the first information indicates whether the terminal feeds back a hybrid automatic repeat request acknowledgement HARQ-ACK for the first PDSCH.

Optionally, the apparatus in this embodiment of this application further includes:
a second determining module, configured to determine the first time.

Herein, the first time may be determined according to an indication by the network or a predefined rule.

Optionally, the apparatus in this embodiment of this application further includes:
a first processing module, configured to not expect to receive the second PDSCH prior to the first time in a case that the second hybrid automatic repeat request HARQ process corresponding to the second physical downlink shared channel PDSCH scheduled by the network-side device is the same as the first HARQ process corresponding to the first PDSCH (the UE is not expected to receive another PDSCH for a given HARQ process starting earlier than T1).

Optionally, the apparatus in this embodiment of this application further includes:
a second receiving module, configured to receive the first PDSCH before the first receiving module receives the second PDSCH.

Optionally, the first PDSCH is a group common PDSCH.

The apparatus in this embodiment of this application determines, for the network-side device, the first time in a case that the HARQ process corresponding to the second PDSCH scheduled by the network-side device is the same as the first HARQ process corresponding to the first PDSCH, and transmits the second PDSCH at a time point not earlier than the first time; then, the terminal receives the second PDSCH at a time point not earlier than the first time. In this way, in a case that no HARQ-ACK is fed back for the first PDSCH, the transmit time of the second PDSCH can be also determined. That is, the embodiments of this application can be applied to group common PDSCHs for transmitting multicast/broadcast services or PDSCHs for which no HARQ-ACK information is fed back, and this can ensure that the terminal has sufficient time to process a received PDSCH, thereby improving effectiveness of system communication.

The PDSCH reception apparatus in this embodiment of this application may be an apparatus, or an apparatus or electronic device having an operating system, or may be a component, an integrated circuit, or a chip in the terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The apparatus provided in this embodiment of this application is capable of implementing the processes implemented in the method embodiment in FIG. 4, with the same technical effects achieved. To avoid repetition, details are not described herein again.

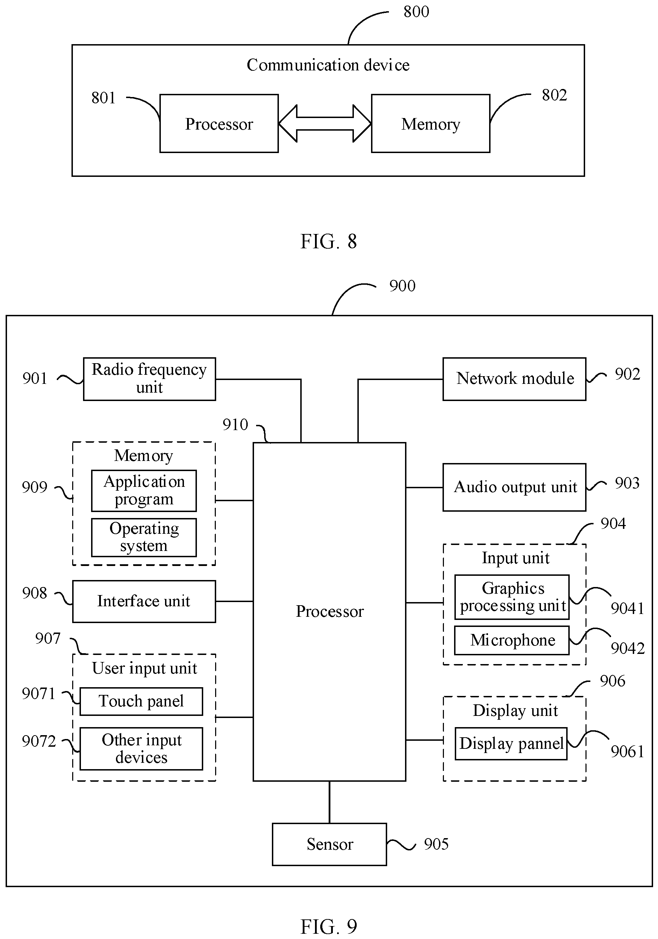

Optionally, as shown in FIG. 8, an embodiment of this application further provides a communication device 800, including a processor 801, a memory 802, and a program or instructions stored in the memory 802 and executable on the processor 801. For example, when the communication device 800 is a terminal and when the program or the instructions are executed by the processor 801, the processes of the foregoing embodiment of the PDSCH reception method applied to the terminal are implemented, with the same technical effects achieved. When the communication device 800 is a network-side device and when the program or the instructions are executed by the processor 801, the processes of the foregoing embodiment of the PDSCH transmission method applied to the network-side device are implemented, with the same technical effects achieved. To avoid repetition, details are not described herein again.

An embodiment of this application further provides a terminal including a processor and a communication interface, and the communication interface is configured to: receive, for the terminal, a second PDSCH in a case that a second hybrid automatic repeat request HARQ process corresponding to the second physical downlink shared channel PDSCH is the same as a first HARQ process corresponding to a first PDSCH and a transmit time of the second PDSCH is not earlier than a first time; where
the first PDSCH is a PDSCH scheduled by a network-side device before scheduling of the second PDSCH; and
the first time is related to first information, and the first information indicates whether the terminal feeds back a hybrid automatic repeat request acknowledgement HARQ-ACK for the first PDSCH.

The terminal embodiments correspond to the foregoing terminal-side method embodiments, and the implementation processes and implementations of the foregoing method embodiments can be applied to the terminal embodiments, with the same technical effects achieved. Specifically, FIG. 9 is a schematic structural diagram of hardware of a terminal for implementing the embodiments of this application. The terminal 900 includes but is not limited to at least part of components such as a radio frequency unit 901, a network module 902, an audio output unit 903, an input unit 904, a sensor 905, a display unit 906, a user input unit 907, an interface unit 908, a memory 909, and a processor 910.

Persons skilled in the art can understand that the terminal 900 may further include a power supply (for example, a battery) supplying power to the components, and the power supply may be logically connected to the processor 910 through a power management system. In this way, functions such as charge management, discharge management, and power consumption management are implemented by using the power management system. The structure of the terminal shown in FIG. 9 does not constitute any limitation on the terminal. The terminal may include more or fewer components than shown in the figure, or a combination of some components, or the components disposed differently. Details are not described herein again.

It can be understood that in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061, and the display panel 9061 may be configured in a form of a liquid crystal display, an organic light-emitting diode, and the like. The user input unit 907 may include a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control key or a power on/off key), a trackball, a mouse, a joystick, and the like. Details are not described herein.

In this embodiment of this application, the radio frequency unit 901 receives downlink data from a network-side device, and then sends the downlink data to the processor 910 for processing; and also sends uplink data to the network-side device. Generally, the radio frequency unit 901 includes but is not limited to an antenna, at least one amplifier, a transceiver, a coupler, a low noise amplifier, a duplexer, and the like.

The memory 909 may be configured to store software programs or instructions and various data. The memory 909 may include a program or instruction storage area and a data storage area. The program or instruction storage area may store an operating system, an application program or instruction required by at least one function (for example, a sound playback function or an image playback function), and the like. In addition, the memory 909 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 910 may include one or more processing units. Optionally, an application processor and a modem processor may be integrated in the processor 910. The application processor primarily processes an operating system, user interfaces, application programs or instructions, and the like. The modem processor primarily processes radio communication, for example, being a baseband processor. It can be understood that the modem processor may alternatively be not integrated in the processor 910.

The radio frequency unit 901 is configured to receive, for a terminal, a second PDSCH in a case that a second hybrid automatic repeat request HARQ process corresponding to the second physical downlink shared channel PDSCH is the same as a first HARQ process corresponding to a first PDSCH and a sending time of the second PDSCH is not earlier than a first time.

The first PDSCH is a PDSCH scheduled by a network-side device before scheduling of the second PDSCH; and
the first time is related to first information, and the first information indicates whether the terminal feeds back a hybrid automatic repeat request acknowledgement HARQ-ACK for the first PDSCH.

The radio frequency unit 901 is further configured to not expect the terminal to receive the second PDSCH prior to the first time in a case that the second hybrid automatic repeat request HARQ process corresponding to the second physical downlink shared channel PDSCH scheduled by the network-side device is the same as the first HARQ process corresponding to the first PDSCH.

The radio frequency unit 901 is further configured to receive the first PDSCH prior to receiving of the second PDSCH.

Optionally, the first PDSCH is a group common PDSCH.

According to the terminal in this embodiment of this application, the network-side device determines the first time in a case that the HARQ process corresponding to the second PDSCH scheduled by the network-side device is the same as the first HARQ process corresponding to the first PDSCH, and transmits the second PDSCH at a time point not earlier than the first time; then, the terminal receives the second PDSCH at a time point not earlier than the first time. In this way, in a case that no HARQ-ACK is fed back for the first PDSCH, the transmit time of the second PDSCH can be also determined. That is, the embodiments of this application can be applied to group common PDSCHs for transmitting multicast/broadcast services or PDSCHs for which no HARQ-ACK information is fed back, and this can ensure that the terminal has sufficient time to process a received PDSCH, thereby improving effectiveness of system communication.

An embodiment of this application further provides a readable storage medium. The readable storage medium may be non-volatile or volatile. A program or instructions are stored in the readable storage medium. When the program or the instructions are executed by a processor, the processes of the foregoing embodiment of the PDSCH transmission method or the PDSCH reception method can be implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to execute a program or instructions to implement the processes of the foregoing embodiments of the PDSCH transmission method or the PDSCH reception method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a non-transient readable storage medium, and when being executed by at least one processor, the computer program product is configured to implement the processes of the foregoing embodiments of the PDSCH transmission method or the PDSCH reception method, with the same technical effects achieved. To avoid repetition, details are not repeated herein.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A PDSCH transmission method, comprising:
determining, by a network-side device, a first time in a case that a second hybrid automatic repeat request HARQ process corresponding to a second physical downlink shared channel PDSCH scheduled by the network-side device is same as a first HARQ process corresponding to a first PDSCH; wherein the first PDSCH is a PDSCH scheduled by the network-side device before scheduling of the second PDSCH, the first time is related to first information, and the first information indicates whether a terminal feeds back a hybrid automatic repeat request acknowledgement HARQ-ACK for the first PDSCH; and
transmitting, by the network-side device, the second PDSCH at a time point not earlier than the first time.

2. The method according to claim 1, wherein the determining, by a network-side device, a first time comprises:
determining, by the network-side device, the first time based on at least one of an indicating manner for the first information and content of the first information; wherein
the indicating manner comprises at least one of following:
being indicated by higher-layer signaling; and
being indicated by downlink control information DCI.

3. The method according to claim 2, wherein the determining, by the network-side device, the first time based on at least one of an indicating manner for the first information and content of the first information comprises:
in a case that the first information is indicated by the higher-layer signaling and the first information indicates that the terminal does not feed back a HARQ-ACK for the first PDSCH, determining, by the network-side device, the first time according to a feedback timing indication in first downlink control information DCI or a predefined rule; wherein
the first DCI is DCI for scheduling the first PDSCH.

4. The method according to claim 2, wherein the determining, by the network-side device, the first time based on at least one of an indicating manner for the first information and content of the first information comprises:
in a case that the first information is indicated by the DCI, determining, by the network-side device, the first time according to a predefined rule or determining the first time based on the content of the first information.

5. The method according to claim 1 or 4, wherein the determining the first time based on the content of the first information comprises:
in a case that the first information indicates that the terminal feeds back a HARQ-ACK for the first PDSCH, determining the first time based on an end position of the HARQ-ACK for the first PDSCH; or
in a case that the first information indicates that the terminal does not feed back a HARQ-ACK for the first PDSCH, determining the first time according to a feedback timing indication in first downlink control information DCI or the predefined rule; wherein
the first DCI is DCI for scheduling the first PDSCH.

6. The method according to claim 3 or 5, wherein the determining the first time according to a feedback timing indication in first downlink control information DCI comprises:
determining, according to the feedback timing indication in the first DCI, a time unit for feeding back the HARQ-ACK; and
determining a target position of the time unit for feeding back the HARQ-ACK as the first time.

7. The method according to claim 6, wherein the target position comprises one of following:
an end position;
a start position;
a start/end position of a predefined symbol; and
an end position of a PUCCH or PUSCH for transmitting the HARQ-ACK.

8. The method according to any one of claims 3 to 5, wherein the predefined rule comprises:
the first time being determined based on a position of T1 time after an end position of the first PDSCH.

9. The method according to claim 8, wherein the T1 time is predefined, or the T1 time is determined based on a PDSCH processing time, or the T1 time is determined based on a subcarrier spacing of PDSCH, or the T1 time is related to a terminal capability, or the T1 time is reported by the terminal to the network-side device, or the T1 time is an end time corresponding to a maximum number of retransmissions.

10. A PDSCH reception method, comprising:
receiving, by a terminal, a second PDSCH in a case that a second hybrid automatic repeat request HARQ process corresponding to the second physical downlink shared channel PDSCH is same as a first HARQ process corresponding to a first PDSCH and a transmit time of the second PDSCH is not earlier than a first time; wherein
the first PDSCH is a PDSCH scheduled by a network-side device before scheduling of the second PDSCH; and
the first time is related to first information, and the first information indicates whether the terminal feeds back a hybrid automatic repeat request acknowledgement HARQ-ACK for the first PDSCH.

11. The method according to claim 10, wherein the first time is determined based on an end position of a HARQ-ACK for the first PDSCH, and the first information indicates that the terminal feeds back the HARQ-ACK for the first PDSCH; or
the first time is determined according to a predefined rule, and the first information indicates that the terminal does not feed back the HARQ-ACK for the first PDSCH.

12. The method according to claim 11, wherein the predefined rule comprises:
the first time being determined based on a position of T1 time after an end position of the first PDSCH.

13. The method according to claim 12, wherein the T1 time is predefined, or the T1 time is determined based on a PDSCH processing time, or the T1 time is determined based on a subcarrier spacing of PDSCH, or the T1 time is related to a terminal capability, or the T1 time is reported by the terminal to the network-side device.

14. The method according to claim 10, further comprising:
not expecting, by the terminal, to receive the second PDSCH prior to the first time in a case that the second hybrid automatic repeat request HARQ process corresponding to the second physical downlink shared channel PDSCH scheduled by the network-side device is same as the first HARQ process corresponding to the first PDSCH.

15. The method according to claim 10, before the receiving the second PDSCH, further comprising:
receiving the first PDSCH.

16. The method according to claim 10, wherein the first PDSCH is a group common PDSCH.

17. A PDSCH transmission apparatus, comprising:
a first determining module, configured to determine a first time in a case that a second hybrid automatic repeat request HARQ process corresponding to a second physical downlink shared channel PDSCH scheduled by a network-side device is same as a first HARQ process corresponding to a first PDSCH; wherein the first PDSCH is a PDSCH scheduled by the network-side device before scheduling of the second PDSCH, the first time is related to first information, and the first information indicates whether a terminal feeds back a hybrid automatic repeat request acknowledgement HARQ-ACK for the first PDSCH; and
a first transmission module, configured to transmit the second PDSCH at a time point not earlier than the first time.

18. The apparatus according to claim 17, wherein the first determining module is configured to determine the first time based on at least one of an indicating manner for the first information and content of the first information; wherein
the indicating manner comprises at least one of following:
being indicated by higher-layer signaling; and
being indicated by downlink control information DCI.

19. The apparatus according to claim 18, wherein the first determining module is configured to: in a case that the first information is indicated by the higher-layer signaling and the first information indicates that the terminal does not feed back a HARQ-ACK for the first PDSCH, determine, for the network-side device, the first time according to a feedback timing indication in first downlink control information DCI or a predefined rule; wherein
the first DCI is DCI for scheduling the first PDSCH.

20. The apparatus according to claim 18, wherein the first determining module is configured to: in a case that the first information is indicated by the DCI, determine, for the network-side device, the first time according to a predefined rule or determine the first time based on the content of the first information.

21. The apparatus according to claim 17 or 20, wherein the first determining module is configured to: in a case that the first information indicates that the terminal feeds back a HARQ-ACK for the first PDSCH, determine the first time based on an end position of the HARQ-ACK for the first PDSCH; or
in a case that the first information indicates that the terminal does not feed back a HARQ-ACK for the first PDSCH, determine the first time according to a feedback timing indication in first downlink control information DCI or the predefined rule; wherein
the first DCI is DCI for scheduling the first PDSCH.

22. The apparatus according to claim 19 or 21, wherein the first determining module comprises:
a first determining submodule, configured to determine, according to the feedback timing indication in the first DCI, a time unit for feeding back the HARQ-ACK; and
a second determining submodule, configured to determine a target position of the time unit for feeding back the HARQ-ACK as the first time.

23. The apparatus according to claim 22, wherein the target position comprises one of following:
an end position;
a start position;
a start/end position of a predefined symbol; and
an end position of a PUCCH or PUSCH for transmitting the HARQ-ACK.

24. The apparatus according to any one of claims 19 to 21, wherein the predefined rule comprises:
the first time being determined based on a position of T1 time after an end position of the first PDSCH.

25. The apparatus according to claim 24, wherein the T1 time is predefined, or the T1 time is determined based on a PDSCH processing time, or the T1 time is determined based on a subcarrier spacing of PDSCH, or the T1 time is related to a terminal capability, or the T1 time is reported by the terminal to the network-side device, or the T1 time is an end time corresponding to a maximum number of retransmissions.

26. A PDSCH reception apparatus, comprising:
a first receiving module, configured to receive, for a terminal, a second PDSCH in a case that a second hybrid automatic repeat request HARQ process corresponding to the second physical downlink shared channel PDSCH is same as a first HARQ process corresponding to a first PDSCH and a transmit time of the second PDSCH is not earlier than a first time; wherein
the first PDSCH is a PDSCH scheduled by a network-side device before scheduling of the second PDSCH; and
the first time is related to first information, and the first information indicates whether the terminal feeds back a hybrid automatic repeat request acknowledgement HARQ-ACK for the first PDSCH.

27. The apparatus according to claim 26, further comprising:
a first processing module, configured to not expect to receive the second PDSCH prior to the first time in a case that the second hybrid automatic repeat request HARQ process corresponding to the second physical downlink shared channel PDSCH scheduled by the network-side device is same as the first HARQ process corresponding to the first PDSCH.

28. The apparatus according to claim 26, further comprising:
a second receiving module, configured to receive the first PDSCH before the first receiving module receives the second PDSCH.

29. The apparatus according to claim 26, wherein the first PDSCH is a group common PDSCH.

30. A network-side device, comprising a processor, a memory, and a program or instructions stored in the memory and executable on the processor, wherein when the program or the instructions are executed by the processor, steps of the PDSCH transmission method according to any one of claims 1 to 9 are implemented.

31. A terminal, comprising a processor, a memory, and a program or instructions stored in the memory and executable on the processor, wherein when the program or the instructions are executed by the processor, steps of the PDSCH reception method according to any one of claims 10 to 16 are implemented.

32. A readable storage medium, wherein the readable storage medium stores a program or instructions, and when the program or the instructions are executed by a processor, steps of the PDSCH transmission method according to any one of claims 1 to 9 are implemented, or steps of the PDSCH reception method according to any one of claims 10 to 16 are implemented.

33. A chip, comprising a processor and a communication interface, wherein the communication interface is coupled to the processor, and the processor is configured to execute a program or instructions to implement steps of the PDSCH transmission method according to any one of claims 1 to 9 or steps of the PDSCH reception method according to any one of claims 10 to 16.

34. A computer program product, wherein the computer program product is stored in a non-transitory storage medium, and the computer program product is executed by at least one processor to implement steps of the PDSCH transmission method according to any one of claims 1 to 9 or steps of the PDSCH reception method according to any one of claims 10 to 16.

35. A communication device, configured to perform steps of the PDSCH transmission method according to any one of claims 1 to 9 or steps of the PDSCH reception method according to any one of claims 10 to 16.
